# EUROPEAN PATENT APPLICATION

(11) **EP 0 678 702 A1**
(43) Date of publication of application: **25.10.1995**
(21) Application number: 95101598.1
(22) Date of filing: 07.02.1995
(51) Int. Cl.: F21Q 1/00, B60Q 1/30

(54) **Luminous signalling device for motor vehicles**

(30) Priority: 21.03.1994 IT UD940042
(71) Applicant: SEIMA ITALIANA SPA, I-33028 Tolmezzo (UD) (IT)
(72) Inventor: Cossetti, Giuliano, I-33028 Tolmezzo (UD) (IT)
(74) Representative: Petraz, Gilberto Luigi

(57) **Abstract**

Luminous signalling device, which is advantageously of the high "stop" type for motor vehicles and comprises a container body (11) that contains a plurality of parabolic reflectors (12) positioned side by side with horizontal surfaces placed above and below and delimiting their height, each parabolic reflector (12) cooperating with an incandescent lamp (13) of a "warning light" type and cooperating frontally with a transparent element (14) consisting of plastic material, the transparent element (14) of each parabolic reflector (12) comprising "n" lenses (15) placed side by side, one lens (115) lying on the same axis as the incandescent lamp (13) and being convex.

## Description

This invention concern a luminous signalling device for motor vehicles, as set forth in the main claim.

To be more exact, the luminous signalling device according to the invention can be used preferably in the field of motor vehicles as a central high "stop" light.

By high "stop" light is meant the third "stop" light fitted at a high central position in the rear part of motor vehicles.

The high stop light is generally fitted inside the rear window at a high or low position or in cooperation with the rear spoiler of the motor vehicle.

High stop lights have been disclosed which are fitted to the rear window within the passenger compartment or on the rear spoiler of motor vehicles.

The high stop lights generally have an elongate shape of a modest height so as to reduce any obstruction of the field of visibility available to the interior driving mirror through the rear window.

The central high stop lights available on the market are essentially of two types depending on the source of light employed.

In particular, a first type uses as its source of light traditional incandescent lamps of a warning light type with a diameter of 5-10 mm., whereas a second type uses luminous diodes also called light-emitting diodes (LED).

The traditional incandescent lamps offer the advantage of having a very high light flux, but on the other hand have a short life and, moreover, do not provide a satisfactory aesthetic effect inasmuch as the light is mainly concentrated at the filament.

In the second type of signalling device the light-emitting diodes are arranged on one or more continuous lines and enable devices to be embodied which have a very modest thickness that meets the aesthetic requirements of the stylists.

Seeing, however, that the luminous capacity of the light-emitting diodes is considerably less, about a quarter/fifth of that of a traditional incandescent lamp, it is necessary to employ a great number of light-emitting diodes to meet the photometric performance required.

At the present time the light-emitting diodes are much more expensive than incandescent lamps owing to their limited use. This fact entails a great increase in the cost of high stop lights of a light-emitting diode type and makes them uncompetitive from an economical point of view.

Moreover, the light-emitting diodes, when used, have to be assembled and connected according to particular arrangements so as to enable them to be supplied with the voltage generated by the battery of the motor vehicle.

Furthermore, when a light-emitting diode, although having a very long working life, deteriorates, it is necessary to replace the whole series of the light-emitting diodes completely, and this entails a high cost for the user.

The present applicants have designed, tested and embodied this invention to overcome the shortcomings of the state of the art and to achieve further advantages.

This invention is set forth and characterised in the main claim, while the dependent claims describe variants of the idea of the main embodiment.

The purpose of the invention is to provide a luminous signalling device for motor vehicles which has a limited height of about 12-16 mm. and a modest cost and which provides the same aesthetic and luminous impact as that obtainable with light-emitting diodes.

The device according to the invention comprises a plurality of luminous sources placed side by side and cooperating with as many parabolic reflectors having a metallised inner surface to increase their reflecting power, and with an outer transparent element.

Each luminous source in the luminous signalling device according to the invention consists of an incandescent lamp.

The parabolic reflector is advantageously symmetrical in relation to the lamp and includes horizontal surfaces located above and below which delimit its height.

The parabolic reflector in the device according to the invention has a width which is advantageously equal to a finite multiple of its height.

The outer transparent element is produced, for instance, by the moulding of a plastic material of the colour required by the regulations for the function to be performed, this colour being red for a stop light.

The transparent element includes for each luminous source a plurality of lenses that provide the required optics; the plurality of lenses is positioned advantageously on the inner surface of the transparent element.

To be more exact, the transparent element includes in cooperation with each parabolic reflector a number "n" of aligned lenses placed side by side, which cover the whole aperture of a parabolic reflector.

Where the parabolic reflector is symmetrical in relation to the lamp, the number "n" is always an odd number.

The lenses are made advantageously on a square base, the side of which is determined by the height of the parabolic reflector.

The lenses have the task of multiplying the image of the luminous source "n" times, so that by looking frontally at the luminous signalling device according to the invention it is possible to see the luminous source multiplied "n" times.

To be more exact, the value "n" in the luminous signalling device according to the invention can take on advantageously, but not only, a value between 3 and 7, but advantageously between 3 and 5.

Where the parabolic reflector is symmetrical in relation to the lamp, since "n" is an odd number, a central lens on the same axis as the lamp and two or more lateral lenses are defined for each single parabolic reflector.

So as to mask the lamp, the lens on the same axis as the lamp includes a second lens which amplifies the image of the filament of the lamp behind that lens.

According to the invention each lamp is fitted within the device with its filament lying on the median lengthwise plane of the device so as to avoid the arising of aesthetic faults which can be seen through the lateral lenses.

In the device according to the invention the lens on the same axis as the lamp is always convex to enlarge the image of the lamp itself, whereas the lateral lenses can be concave or convex.

The lateral lenses include advantageously a round central zone which is substantially flat or has a very great spherical radius so as to provide a luminous image which can be likened to a light-emitting diode when seen from outside.

With this contrivance each lateral lens "sees" a specific zone of the parabolic reflector and provides outwards its own diverging luminous beam.

The round central and substantially flat zone of the lens does not create deflections of the luminous rays coming from the parabolic reflector and provides a parallel beam of light which can be likened to the desired image of the light-emitting diode.

According to a variant the central and substantially flat zone includes micro-lenses, which enlarge the emerging luminous beam on a horizontal plane in an angular field "a" between -15° and +15°, but advantageously between -10° and +10°. These micro-lenses may consist of micro-prisms, embossings or other types of like and equivalent finishings.

The attached figures are given as a non-restrictive example and show some preferred embodiments of the invention as follows:-
- Fig.1: is a front view of the luminous signalling device according to the invention;
- Fig.2: is a lengthwise section of the luminous signalling device along the line A-A of Fig.1;
- Fig.3: shows the detail B of Fig.2 in an enlarged scale;
- Fig.4: is a view from inside the outer transparent element in association with the luminous signalling device according to the invention;
- Fig.5: is a diagrammatic partial front view of the device of Fig.1 without the outer transparent element;
- Fig.6: shows a variant of the device of Fig.3.

The reference number 10 in the attached figures denotes generally a luminous signalling device according to the invention.

The luminous signalling device 10 according to the invention is employed advantageously, but not only, as a high stop light on motor vehicles.

The luminous signalling device 10 according to the invention comprises a frontally open container body 11, in which is integrated a plurality of parabolic reflectors 12 positioned side by side and aligned evenly along the lengthwise axis of the container body 11.

The parabolic reflectors 12 include an upper surface and lower surface which define the height of the reflectors 12.

The parabolic reflectors 12 have advantageously a width equal to a finite multiple of their height.

The container body 11 includes fixture means 19, screw type means in this case, to enable it to be fitted to a motor vehicle.

An incandescent lamp 13 of the type used, for instance, on the instrument panel and for warning lights on the motor vehicle cooperates with each parabolic reflector 12 and can be of a stationary type with electrodes soldered to a printed circuit or of a replaceable type inserted with a spring catch in a lamp socket.

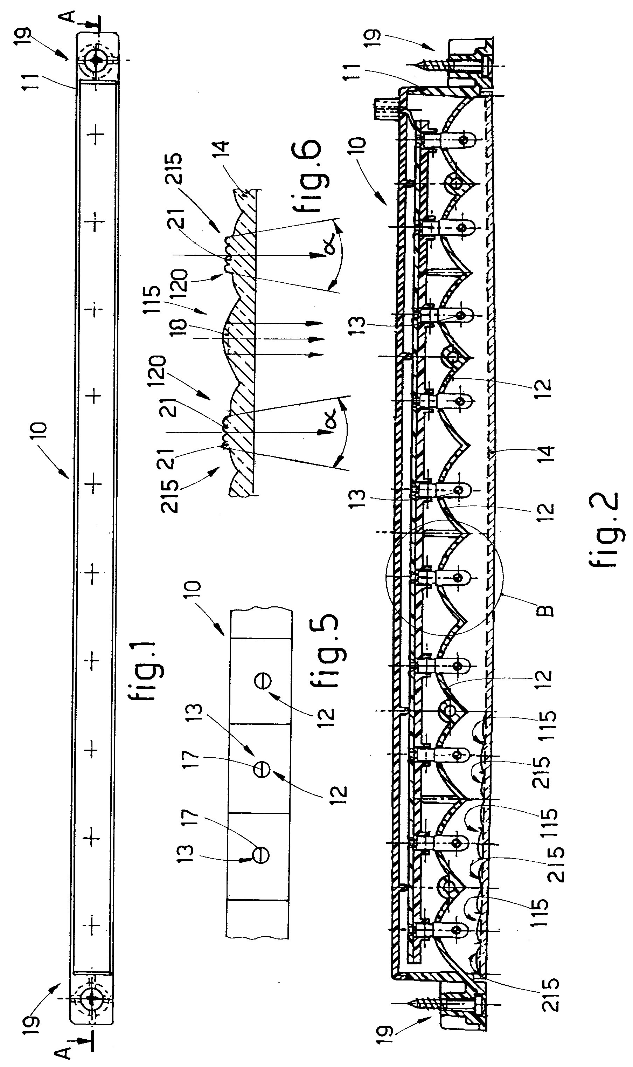

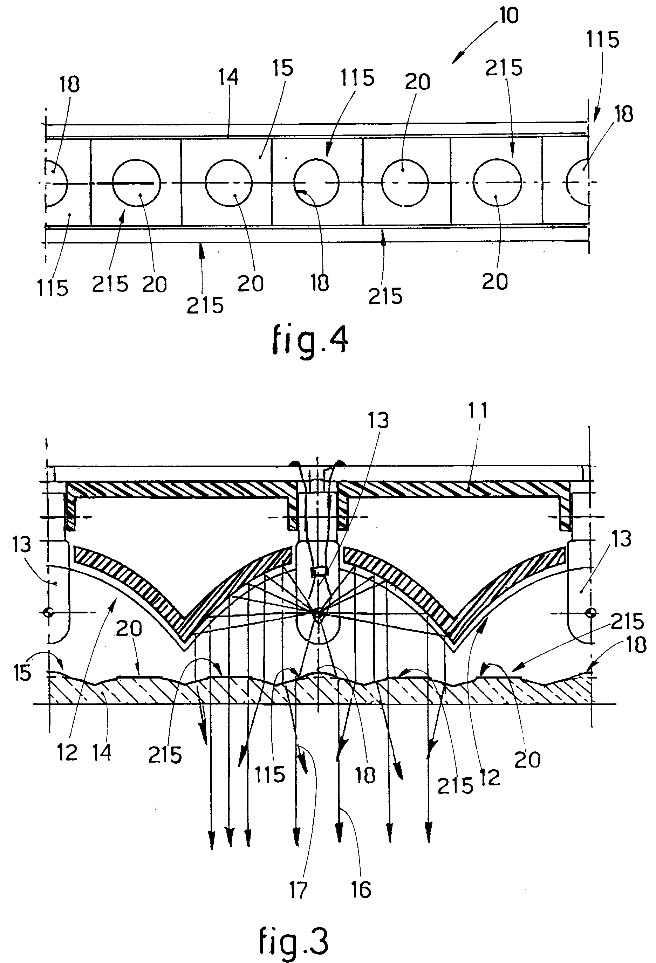

In this case Figs.2 and 3 show a luminous signalling device 10 in which the lamps 13 are of a non-replaceable type.

The parabolic reflectors 12 have their inner surface advantageously metallised to increase their reflecting power.

The container body 11 is associated with an outer transparent element 14 made by moulding, for instance, a transparent plastic material of the colour required by the regulations for the function to be performed.

The outer transparent element 14 has a shape and dimensions such as to close completely the frontal aperture of the container body 11.

The outer transparent element 14 comprises for each incandescent lamp 13 a plurality "n" of lenses 15, which have the task of deflecting luminous rays 16 emitted by the incandescent lamp 13 and reflected by the parabolic reflector 12 in such a way that a person looking frontally at the luminous signalling device 10 will see the luminous source multiplied "n" times.

The lenses 15 are formed advantageously, but not necessarily, on the inner surface of the transparent element 14 facing the parabolic reflectors 12.

Thus, the optical effect achieved is to give the feeling that the number of luminous sources within the device 10 is equal to the number of lamps 13 multiplied "n" times and that those sources are distributed evenly along the whole lengthwise extent of the luminous device 10.

In this case the parabolic reflectors 12 are symmetrical in relation to the incandescent lamp 13 and the number "n" is an odd number.

The lenses 15 are designed in such a way as to send the emerging beam of light according to the angles of visibility laid down in the regulations.

In the luminous signalling device 10 according to the invention shown in the figures the segment of the outer transparent element 14 coinciding with each parabolic reflector 12 includes three lenses 15 placed side by side, which cover the aperture of the parabolic reflector 12 completely.

The lenses 15 are formed on an advantageously square base (Fig.4), the side of which is determined by the height of the parabolic reflector 12.

In the luminous signalling device 10 according to the invention the value of "n" may be between 3 and 7 to define one lens 115 on the same axis as the lamp 13 and two or more lateral lenses 215.

The lens 115 on the same axis as the lamp 13 amplifies the image behind itself, while the lateral lenses 215 positioned at the sides of the lens 115 lying on the same axis as the incandescent lamp 13 are placed to cover the extent of the parabolic reflector 12.

To prevent the "n" visible luminous sources being luminous images of the filament 17 of the incandescent lamp 13, each lens includes advantageously a central round zone 20, which is substantially flat or has a very great spherical radius, so as to provide a luminous image which can be likened to a light-emitting diode when seen from the outside.

In fact, the central, round and substantially flat zone 20 does not create deflections of the luminous rays 16 coming from the reflector 12 and provides a parallel beam of light which can be likened to the desired image of the light-emitting diode.

According to a variant shown in Fig.6 the central round zone 120 includes a plurality of micro-lenses 21 formed with micro-prisms, embossings or other analogous systems, which enlarge the visibility of the image of the luminous source in a horizontal angular field of at least ±10°.

The lens 115 on the same axis as the incandescent lamp 13 is always convex since it has the purpose of enlarging the luminous image of the lamp 13 with which is associated.

In this case a second convex spherical lens 18 is associated with the lens 115 on the same axis as the lamp 13 and has the task of converting the luminous image of the filament 17 into a round image having substantially the dimensions of a light-emitting diode.

The lateral lenses 215 can be of a convex or concave type depending on the desired effect on the luminous beam emitted by the luminous signalling device 10 according to the invention.

In this example the attached figures show a luminous signalling device 10 according to the invention which comprises ten incandescent lamps 13 and in which the outer transparent element 14 includes three lenses, namely a central lens 115 and two lateral lenses 215, in correspondence with each parabolic reflector 12, the resulting image being that of a device 10 embodied with thirty light-emitting diodes.

It is clear that, if an outer transparent element 14 with five lenses 15 is used in correspondence with each parabolic reflector 12, the resulting image obtained is that of a device 10 embodied with fifty light-emitting diodes.

So as to achieve the correct, desired optical effect, it is necessary that the lamps 13 should all be fitted in such a way that their filament 17 lies on the median lengthwise plane of the luminous signalling device 10 according to the invention as shown diagrammatically in Fig.5.

## Claims

**1 -** Luminous signalling device, which is advantageously of the high "stop" type for motor vehicles and comprises a container body (11) that contains a plurality of parabolic reflectors (12) positioned side by side with horizontal surfaces placed above and below and delimiting their height, each parabolic reflector (12) cooperating with an incandescent lamp (13) of a "warning light" type and cooperating frontally with a transparent element (14) consisting of plastic material, the device being characterised in that the transparent element (14) of each parabolic reflector (12) comprises "n" lenses (15) placed side by side, one lens (115) lying on the same axis as the incandescent lamp (13) and being convex.

**2 -** Luminous signalling device as in Claim 1, characterised in that the "n" concave or convex lenses (215) positioned at the sides of the lens (115) lying on the same axis as the lamp (13) cover the extent of the parabolic reflector (12), each of all those lenses (215) having a substantially flat, round central zone (20) able to provide an image multiplied "n" times of the luminous source, the image being likenable to that of a light-emitting diode device.

**3 -** Luminous signalling device as in Claim 1 or 2, in which at least some of the lenses (215) positioned at the sides of the lens (115) lying on the same axis as the lamp (13) are concave.

**4 -** Luminous signalling device as in Claim 1 or 2, in which at least some of the lenses (215) positioned at the sides of the lens (115) lying on the same axis as the lamp (13) are convex.

**5 -** Luminous signalling device as in Claim 1 or 2, in which the round central zone (120) of at least some of the lenses (215) positioned at the sides of the lens (115) lying on the same axis as the lamp (13) include micro-lenses (21) which enlarge the emerging luminous beam in a horizontal angular field "a" ranging from at least +10° to at least -10°.

**6 -** Luminous signalling device as in any claim hereinbefore, in which the parabolic reflector (12) is symmetrical in relation to the axis of the incandescent lamp (13) and the lenses (15) are in an odd number between three and seven.

**7 -** Luminous signalling device as in any claim hereinbefore, in which the lenses (15) have a square base, the side of the square being determined by the height of the parabolic reflector (12).

**8 -** Luminous signalling device as in any claim hereinbefore, in which the width of the parabolic reflector (12) is a finite multiple of its height.
